**Europäisches Patentamt**

**European Patent Office**

**Office européen des brevets**

(19)

(11) Veröffentlichungsnummer: **0 256 390
B1**

# (12) EUROPÄISCHE PATENTSCHRIFT

(45) Veröffentlichungstag der Patentschrift:
25.07.90

(51) Int. Cl.⁵: **F16F 7/08**

(21) Anmeldenummer: **87111061.5**

(22) Anmeldetag: **30.07.87**

(54) **Reibungsdämpfer.**

(30) Priorität: **16.08.86 DE 3627816**

(43) Veröffentlichungstag der Anmeldung:
**24.02.88 Patentblatt 88/8**

(45) Bekanntmachung des Hinweises auf die Patenterteilung:
**25.07.90 Patentblatt 90/30**

(84) Benannte Vertragsstaaten:
**DE ES FR GB IT**

(56) Entgegenhaltungen:
**AU-B- 17 575
DE-A- 2 602 620
DE-A- 2 706 884
FR-A- 2 493 443**

(73) Patentinhaber: **Stabilus GmbH, Wallersheimer Weg 100,
D-5400 Koblenz-Neuendorf(DE)**

(72) Erfinder: **Körtgen, Bernd, Dipl.-Ing. (FH),
Johanniterstrasse 3, D-5488 Adenau(DE)**

(74) Vertreter: **Weickmann, Heinrich, Dipl.-Ing. et al,
Patentanwälte Dipl.-Ing. H.Weickmann Dipl.-Phys.Dr.
K.Fincke Dipl.-Ing. F.A.Weickmann Dipl.-Chem. B. Huber
Dr.-Ing. H. Liska Dipl.-Phys.Dr. J. Prechtel
Postfach 860820, D-8000 München 86(DE)**

## Beschreibung

### HINTERGRUND DER ERFINDUNG

Die Erfindung betrifft einen Reibungsdämpfer umfassend ein Außenteil mit einem durch eine zylindrische Innenfläche begrenzten Hohlraum, ein relativ zu dem Außenteil in Richtung der Längsachse der Innenfläche teleskopisch bewegbares Kernteil und eine Reibkolbenbaugruppe an dem Kernteil, welche in reibendem Eingriff mit der Innenfläche des Außenteils steht, wobei die Reibkolbenbaugruppe eine Mehrzahl um deren Mittelachse verteilte Reibelemente aufweist und diese Reibelemente durch eine radial wirkende Federung in reibendem Eingriff mit der Innenfläche gespannt sind.

Solche Reibungsdämpfer werden für verschiedene Anwendungsgebiete eingesetzt. Sie können beispielsweise als Teile von Gasfedern benutzt werden, die zum Gewichtsausgleich von Kofferraumdeckeln oder Motorhauben bei Kraftfahrzeugen im Einsatz sind. Weiter können solche Reibungsdämpfer bei Waschmaschinen zur Schwingungsdämpfung eingesetzt werden.

### ANGABEN ZUM STAND DER TECHNIK

Aus der deutschen Offenlegungsschrift 2 602 620 ist ein Reibungsdämpfer bekannt, bei dem eine Kolbenstange durch das eine Ende eines Zylinders eingeführt ist und innerhalb des Zylinders eine Reibkolbenbaugruppe trägt. Die Reibkolbenbaugruppe besteht dabei aus drei über den Umfang der Kolbenstange verteilten Reibkolbenelementen, welche mit der Kolbenstange einzeln verbunden sind und auf ihren Außenseiten Reibbeläge tragen. Eine Ringfeder drückt die Reibkolbenelemente gegen die Innenfläche des Zylinders. Die Reibbeläge müssen auf den Reibkolbenelementen beispielsweise durch Kleben befestigt werden. Dieser bekannte Reibungsdämpfer besteht somit aus einer Vielzahl von Einzelteilen, die teuer in der Herstellung sind und eine aufwendige Montage erfordern.

Aus der FR-A 2 493 443 ist ein Reibungsdämpfer bekannt, bei dem ein Reibungskolben an der Innenseite eines Zylinders gleitet. Der Reibungskolben besteht aus einem an der Innenseite des Zylinders anliegenden Reibring aus elastischem Werkstoff, der von einem Andrückring getragen ist. Der Andrückring besteht aus einem Verbindungsring und von diesem Verbindungsring ausgehenden Segmenten, die mit ihrem Außenumfang an dem Innenumfang des Reibrings anliegen. Ein Spreizkonus liegt an dem Innenumfang der Segmente an und ist durch eine axial gerichtete Federung so vorgespannt, daß er die Segmente und damit den Reibring radial auswärts gegen die Innenumfangsfläche des Zylinders andrückt. Der Verbindungsring sitzt auf einer Schulter auf, die zwischen einem durchmessergrößeren Hauptabschnitt der Kolbenstange und einem durchmesserkleineren Befestigungsabschnitt der Kolbenstange gebildet ist. Die auf den Spreizkonus einwirkende Federung ist an dem freien Ende des Befestigungsabschnitts durch einen Seegerring abgestützt. Durch die Vielzahl der zur Anwendung kommenden Teile ist dieser Reibungsdämpfer kompliziert in der Herstellung der Einzelteile und in deren Zusammenbau und damit teuer.

Aus der DE-A 2 706 884 ist eine pneumatische Feder mit einem Zylinder und einem in dem Zylinder gleitenden Kolben bekannt. Dabei sind an dem Kolben axial gerichtete Segmente angebracht, die nahe ihren freien Enden Warzen tragen und mit diesen in Eingriff mit einer Ringausnehmung an der Innenseite des Zylinders treten können. Eine Reibungsfunktion der Segmente ist nicht ausdrücklich erwähnt und wohl auch unerwünscht, ist aber nicht ganz zu vermeiden. Ungünstig bei dieser Ausführungsform ist es jedenfalls, daß durch die integrale Herstellung der Segmente mit dem Dämpfungskolben deren Vorspannung praktisch nicht einstellbar ist, so daß es kaum möglich ist, eine gewünschte Reibwirkung einzustellen.

### AUFGABE DER ERFINDUNG

Die Aufgabe der Erfindung ist es, einen Reibungsdämpfer zu schaffen, der möglichst einfach im Aufbau ist und eine geringe Anzahl preiswerter und leicht herstellbarer Teile aufweist. Ferner soll die Montage einfach sein und eine gleichbleibende Dämpfwirkung über eine lange Betriebszeit gewährleistet werden.

### DER GRUNDGEDANKEN DER ERFINDUNG

Die Erfindung geht aus von einem Reibungsdämpfer umfassend ein Außenteil mit einem durch eine zylindrische Innenfläche begrenzten Hohlraum, ein relativ zu dem Außenteil in Richtung der Längsachse der Innenfläche teleskopisch bewegbares Kernteil und eine an dem Kernteil befestigte Reibkolbenbaugruppe, welche in reibendem Eingriff mit der Innenfläche des Außenteils steht, wobei die Reibkolbenbaugruppe eine Mehrzahl um deren Mittelachse verteilte Reibelemente aufweist und diese Reibelemente durch eine radial wirkende Federung in reibendem Eingriff mit der Innenfläche des Außenteils gespannt sind, wobei die Reibelemente von Mantelsegmenten eines topfförmigen Reibkolbens gebildet sind, welche voneinander durch Schlitze getrennt sind und mit einem ihnen gemeinsamen Grundkörper des topfförmigen Reibkolbens einstückig zusammenhängen.

Bei einem solchen Reibungsdämpfer wird vorgeschlagen, daß die radial wirkende Federung von mindestens einer Sternfeder mit einem Zentralteil und einer Mehrzahl von Federzungen gebildet ist, wobei der Zentralteil am Grundkörper des topfförmigen Reibkolbens sandwichartig mittel- oder unmittelbar axial innen anliegt und die Federzungen an den Mantelsegmenten des topfförmigen Reibkolbens radial innen anliegen, so daß die Reibkraft des Dämpfers auf einen definierten Wert einstellbar ist. Bei dieser Ausführungsform wird die Montage besonders einfach, da sowohl der Reibkolben wie auch die Federung zentral an dem Kernteil befestigt werden können.

Es ist möglich, daß die Mantelsegmente mit einer die Reibung begünstigenden Beschichtung versehen sind. Eine solche Beschichtung läßt sich leicht auf die Mantelsegmente aufbringen. Es ist aber auch denkbar, daß der Reibkolben aus einem Material besteht, welches selbst, d.h. ohne Beschichtung eine ausreichende Reibwirkung entfaltet, beispielsweise kann der Reibkolben aus Kunststoff, insbesondere elastomerem Kunststoff, oder Gummi, bestehen, wobei das Material des Reibkolbens zur Erhöhung der Reibung mit einem reibungserhöhenden Füllmaterial gefüllt sein kann.

Nach einer Weiterbildung der Erfindung ist vorgesehen, daß die Sternfeder an den Mantelsegmenten nahe deren dem Grundkörper fernen Enden anliegt. Durch diese Maßnahme wird erreicht, daß die Feder die größtmögliche Vorspannkraft erzielt.

Um eine möglichst wirksame Federung zu erzielen, empfiehlt es sich, daß die Sternfeder topfförmig ausgebildet ist, wobei die Federzungen von dem Grundkörper weg gerichtet sind. Die Federzungen können dabei mit dem Zentralteil einen 90° übersteigenden Winkel einschließen, etwa einen Winkel von mehr als 120°.

Man kann eine oder mehrere Federzungen jeweils an einem Mantelsegment anliegen lassen. Die Alternative mit mehreren Federzungen pro Mantelsegment sorgt dafür, daß man auf eine Winkeljustierung der Sternfeder gegenüber dem Reibkolben bei der Montage weniger Aufmerksamkeit anwenden muß. Der Zentralteil der Sternfeder kann an einem zentralen Vorsprung des Grundkörpers des topfförmigen Kolbens mittelbar oder unmittelbar anliegen. Duch die Bemessung dieses zentralen Vorsprungs in axialer Richtung, läßt sich die optimale Lage der Federzungen zu den Mantelsegmenten einstellen.

Um die Reibkraft möglichst unabhängig von der Eigenfederung des Mantelsegments zu machen, d.h. eine durch die Federung definierte Reibkraft zu erzeugen wird vorgeschlagen, daß die Mantelsegmente mit dem Grundkörper jeweils über eine Verbindungsstelle von verringertem Querschnitt zusammenhängen. Der verringerte Querschnitt kann etwa dadurch gewonnen werden, daß die Mantelsegmente an den Verbindungsstellen mit dem Grundkörper eine geringere radiale Breite besitzen als an ihren freien Enden.

Die Montage der Reibkolbenbaugruppe auf dem Kernteil wird besonders einfach dadurch, daß der Grundkörper des topfförmigen Reibkolbens und der Zentralteil der Sternfeder sandwichartig aneinander anliegend gemeinsam auf einem Fortsatz des Kernteils befestigt, insbesondere angenietet sind.

Um eine Beschädigung der Reibkolbenbaugruppe beim Anfahren gegen eine etwaige Endwand des Außenteils zu vermeiden wird vorgeschlagen, daß an mindestens einer axial gerichteten Endfläche des topfförmigen Reibkolbens eine Schutzscheibe angebracht ist. Auch diese Schutzscheibe kann gemeinsam mit dem Reibkolben und mit der Federung auf einem Fortsatz des Kernteils befestigt sein.

Die Reibkraft kann beispielsweise dadurch variiert werden, daß mehrere Sternfedern stapelartig übereinander angeordnet sind. Eine andere Möglichkeit zur Einstellung der Reibkraft besteht darin, daß an der Topfbodeninnenseite der topfförmig ausgebildeten Sternfeder eine Beilagscheibe anliegt. Bei dieser letzteren Ausführungsform läßt sich die Andrückwirkung der Federzungen insbesondere dadurch beeinflußen, daß die Beilagscheibe mit ihrem radial äußeren Rand auf die Federzungen einwirkt. Auch die Beilagscheibe kann gemeinsam mit der Sternfeder und dem Reibkolben sowie gegebenenfalls gemeinsam auch mit einer Schutzscheibe an einem Fortsatz des Kernteils befestigt sein.

Bei einem ersten Anwendungsfall des Reibungsdämpfers ist vorgesehen, daß der Außenteil von dem Zylinder eines Zylinderkolbengeräts gebildet ist und der Kernteil von einer Kolbenstange des Zylinderkolbengeräts gebildet ist, wobei die Kolbenstange dichtend durch mindestens ein Endteil des Zylinders hindurchgeführt ist und der Innenraum des Zylinders mit einem Fluid gefüllt ist. Dabei können die Schlitze Überströmkanäle zwischen zwei Arbeitsräumen bilden, welche innerhalb des Zylinders beidseits der Reibkolbenbaugruppe gebildet sind. Bei einer solchen Ausführungsform kann kombiniert eine Fluidendämpfung und eine mechanische Reibungsdämpfung bereitgestellt werden. Das Fluid kann wenigstens zum Teil von unter Druck stehendem Gas gebildet sein, so daß das Zylinderkolbengerät eine Ausschubkraft erzeugt.

Bei einer anderen Ausführungsform ist der Kernteil von dem Zylinder eines Zylinderkolbengeräts gebildet und der Außenteil von einem auf dem Zylinder außenseitig geführten Teleskoprohr. Dabei kann das Zylinderkolbengerät selbst wieder als eine Druckgasfeder ausgebildet sein.

Die Verbindungsstelle zwischen dem Grundkörper des Reibkolbens und den Mantelsegmenten muß natürlich so dimensioniert sein, daß über diese Verbindungsstellen die jeweilige Reibkraft mit Sicherheit übertragen werden kann.

Die verschiedenen erfindungscharakteristischen Merkmale sind insbesondere in den Ansprüchen aufgeführt. Zum besseren Verständnis der Erfindung, ihrer Vorteile und spezifischen Wirkungen, wird auf die beigefügten Zeichnungen und auf die folgende Beispielsbeschreibung verwiesen, in denen bevorzugte Ausführungsformen der Erfindung dargestellt und beschrieben sind.

## KURZBESCHREIBUNG DER ZEICHNUNGEN

Die Erfindung wird im folgenden im Detail unter Bezugnahme auf die Ausführungsformen beschrieben, die in den Zeichnungen dargestellt sind; von den Zeichnungen stellen dar:

Fig. 1 eine Gasfeder mit erfindungsgemäßem Reibungsdämpfer im Längsschnitt;
Fig. 2 einen vergrößerten Längsschnitt zur Fig. 1 im Bereich der Reibkolbenbaugruppe;
Fig. 3 einen erfindungsgemäßen Reibungsdämpfer in Verbindung mit einer Gasfeder, jedoch außerhalb des Gasfederzylinders angeordnet.

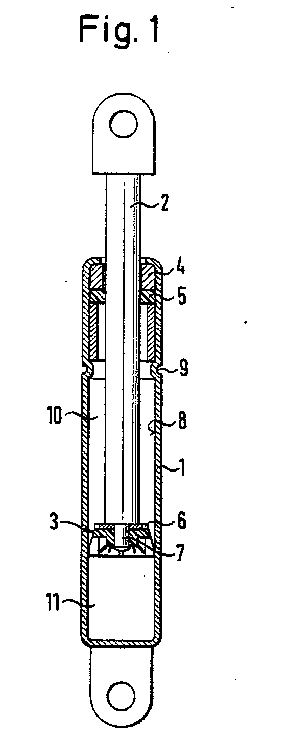

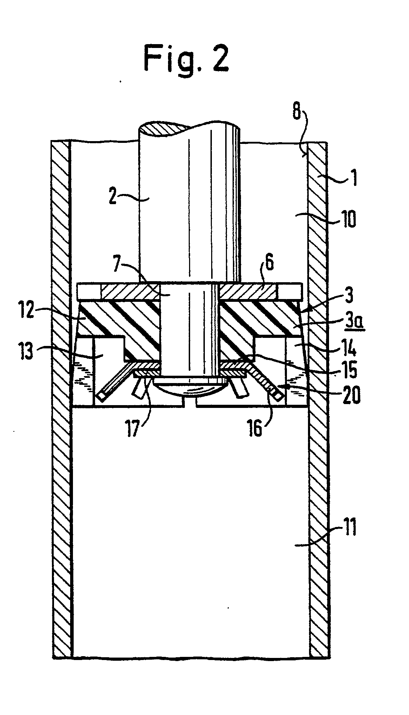

Der Reibungsdämpfer ist in den Fig. 1 und 2 am Beispiel einer Gasfeder gezeigt. Für bestimmte Einbaufälle ist es wünschenswert, daß die Gasfeder eine definierte Reibung aufweist. Der Reibungsdämpfer weist ein zylindrisches Gehäuse 1 auf, gegen dessen Innenwand 8 eine mit einer Kolbenstange 2 verbundene Reibkolbenbaugruppe 3 gedrückt wird. Am oberen Ende des zylindrischen Gehäuses 1 ist die Kolbenstange 2 mittels einer Kolbenstangenführung 4 geführt und durch eine Kolbenstangendichtung 5 nach außen abgedichtet. Der Innenraum des zylindrischen Gehäuses 1 weist eine unter Druck stehende Gasfüllung auf und wird durch die Reibkolbenbaugruppe 3 in zwei Arbeitsräume 10 und 11 unterteilt, wobei die Reibkolbenbaugruppe 3 zusammen mit einer Schutzscheibe 6 auf einem Kolbenstangenansatz 7 befestigt ist. Zur Begrenzung der Ausschubbewegung der Kolbenstange 2 kommt die Schutzscheibe 6 an einem zylinderfesten Bauteil – im vorliegenden Falle an einer Sicke 9 – des zylindrischen Gehäuses 1 zur Anlage. Ein topfförmig ausgebildeter Reibkolben 3a besteht aus einem Grundkörper 12 und Mantelsegmenten 13, die durch einseitig offene, axiale Schlitze 14 gebildet werden. Eine Sternfeder 20 besteht aus einem Zentralteil 15 und mehreren nach außen weisenden Federzungen 16, die in einem Winkel zur Achse des Reibungsdämpfers verlaufen und innen auf die Mantelsegmente 13 drücken. Diese Sternfeder 20 ist zusammen mit einer Beilagscheibe 17 sowie mit dem Reibkolben 3a und der Schutzscheibe 6 auf dem Kolbenstangenfortsatz 7 der Kolbenstange 2 befestigt, wodurch eine vormontierbare Baueinheit gebildet ist. Die Anpreßkraft, mit der die Mantelsegmente 13 gegen die Innenwand 8 des zylindrischen Gehäuses 1 gedrückt werden, wird durch entsprechende Auslegung der Sternfeder 20 bestimmt. So kann beispielsweise die Andrückkraft durch entsprechende Wahl des Außendurchmessers der Beilagscheibe 17 beeinflußt werden, oder es können mehrere Sternfedern mit entsprechenden Federzungen aufeinandergestapelt zu einem Federpaket vereinigt sein. Die Schutzscheibe 6 bewirkt, daß beim Anschlagen an der Sicke der Reibkolben 3a nicht beschädigt wird, während die axialen Schlitze 14 Düsenfunktionen übernehmen, damit ein Gasaustausch zwischen den Arbeitsräumen 10 und 11 erfolgen kann.

Der in den Fig. 1 und 2 gezeigte Reibkolben 3a weist einstückig mit dem Grundkörper 12 gebildete Mantelsegmente 13 auf, wobei dieser Reibkolben 3a vorzugsweise aus einem Kunststoff-Spritzteil besteht. Um die Eigenfederung der Mantelsegmente 13 gering zu halten, ist deren Wandstärke im Bereich des Grundkörpers 12 am geringsten. Die Wandstärke muß jedoch so gewählt sein, daß vom Übergangsquerschnitt der Mantelsegmente 13 zum Grundkörper 12 die Reibkraft mit Sicherheit übertragen werden kann.

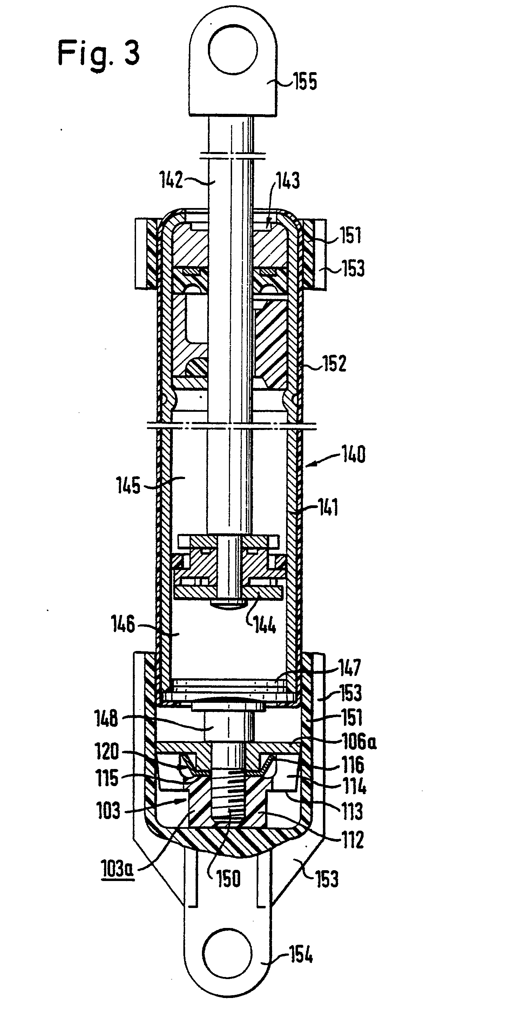

In Fig. 3 ist ein weiteres Anwendungsbeispiel für einen erfindungsgemäßen Reibungsdämpfer dargestellt. Man erkennt dort eine Gasfeder 140 mit einem Zylinder 141 und einer Kolbenstange 142. Die Kolbenstange 142 ist durch eine Führungs- und Dichtungseinheit 143 an einem Ende des Zylinders 141 herausgeführt und trägt innerhalb des Zylinders 141 eine Kolbeneinheit 144. Der Innenraum des Zylinders 141 ist mit Druckgas gefüllt. Das Druckgas versucht die Kolbenstange 142 aus dem Zylinder 141 auszuschieben. Die Bewegung der Kolbenstange 142 ist durch die Kolbeneinheit 144 pneumatisch gedämpft. Die Kolbeneinheit 144 weist zu diesem Zweck Durchlaßöffnungen auf, welche die beiden Arbeitsräume 145 und 146 miteinander verbinden, wobei der Querschnitt dieser Verbindungskanäle von der Bewegungsrichtung der Kolbenstange 142 abhängig ist, so daß die Ausschubbewegung der Kolbenstange stärker gedämpft ist als die Einschubbewegung der Kolbenstange. Der Zylinder 141 weist an seinem kolbenstangen-fernen Ende eine Abschlußplatte 147 auf. Auf dieser Abschlußplatte 147 ist ein Zapfen 148 angeschweißt. Dieser Zapfen 148 trägt eine Reibkolbenbaugruppe 103 mit einem Reibkolben 103a. Der Reibkolben 103a besteht aus einem Grundkörper 112 und Mantelsegmenten 113, welche durch Schlitze 114 voneinander getrennt sind, jedoch einstückig mit dem Grundkörper 112 zusammenhängen. An dem Grundkörper liegt eine Sternfeder 120 mit einem Zentralteil 115 und Federzungen 116 an. Der Reibkolben 103a ist zusammen mit der Sternfeder 120 und einer Schutzscheibe 106a auf dem Zapfen 148 befestigt und zwar dadurch, daß ein Gewindeabschnitt 150 des Zapfens 148 in den Grundkörper 112 eingeschraubt ist. Die Reibkolbenbaugruppe 103 ist innerhalb eines Teleskoprohrs 151 aufgenommen, welches auf der Außenseite des Zylinders 141 teleskopisch gleitend geführt ist. Der Zylinder 141 ist von einem Schrumpfschlauch 152 eingeschlossen, auf welchem das Teleskoprohr 151 gleitet. Das Teleskoprohr 151 besteht aus Kunststoff und ist durch Rippen 153 versteift. Die Reibkolbenbaugruppe 103 wirkt mit der Innenfläche des Teleskoprohrs 151 genauso zusammen, wie in der Ausführungsform nach den Fig. 1 und 2 die Reibkolbenbaugruppe 3 mit der Innenfläche 8 des Zylinders 1 zusammenwirkt. Das Teleskoprohr 151 trägt an seinem Ende ein Gelenkauge 154. Ein weiteres Gelenkauge 155 ist an der Kolbenstange 142 angebracht. Das Gerät gemäß Fig. 3 kann beispielsweise zwischen einer Motorhaube und der Karosserie eines Kraftfahrzeugs eingebaut werden. Die Gasfeder 140 wirkt dann über einen bestimmten Hubbereich als Kompensation für das Gewicht der Motorhaube. Durch den Hub der Kolbenstange 142 gegenüber dem Zylinder 141 ist der normale Öffnungshub der Motorhaube bestimmt. Wird darüberhinaus eine weitergehende Öffnung der Motorhaube gewünscht, so verschiebt sich das Teleskoprohr 151 gegenüber dem Zylinder 141. Diese Verschiebebewegung ist durch das Zusammenwirken der Reibkolbenbaugruppe 103 mit dem Teleskoprohr 151 gedämpft, so daß die Motorhaube nicht plötzlich zurückfallen kann.

**Patentansprüche**

1. Reibungsdämpfer umfassend ein Außenteil (1) mit einem durch eine zylindrische Innenfläche (8) begrenzten Hohlraum (10, 11), ein relativ zu dem Außenteil (1) in Richtung der Längsachse der Zylinderfläche (8) teleskopisch bewegbares Kernteil (2) und eine an dem Kernteil befestigte Reibkolbenbaugruppe (3), welche in reibendem Eingriff mit der Innenfläche (8) des Außenteils (1) steht, wobei die Reibkolbenbaugruppe (3) eine Mehrzahl um deren Mittelachse verteilter Reibelemente aufweist und diese Reibelemente durch eine radial wirkende Federung in reibenden Eingriff mit der Innenfläche (8) des Außenteils (1) gespannt sind, wobei die Reibelemente von Mantelsegmenten (13) eines topfförmigen Reibkolbens (3a) gebildet sind, welche voneinander durch Schlitze (14) getrennt sind und mit einem ihnen gemeinsamen Grundkörper (12) des topfförmigen Reibkolbens (3a) einstückig zusammenhängen, dadurch gekennzeichnet, daß die radial wirkende Federung von mindestens einer Sternfeder (20) mit einem Zentralteil (15) und einer Mehrzahl von Federzungen (16) gebildet ist, wobei der Zentralteil (15) am Grundkörper (12) des topfförmigen Reibkolbens (3a) sandwichartig mittel- oder unmittelbar axial innen anliegt und die Federzungen (16) an den Mantelsegmenten (13) des topfförmigen Reibkolbens (3a) radial innen anliegen, so daß die Reibkraft des Dämpfers auf einen definierten Wert einstellbar ist.

2. Reibungsdämpfer nach Anspruch 1, dadurch gekennzeichnet, daß der Reibkolben (3a) aus Kunststoff, insbesondere elastomerem Kunststoff, oder Gummi besteht.

3. Reibungsdämpfer nach Anspruch 1 oder 2, dadurch gekennzeichnet, daß die Sternfeder (20) an den Mantelsegmenten (13) nahe deren dem Grundkörper (12) fernen Enden anliegt.

4. Reibungsdämpfer nach einem der Ansprüche 1 bis 3, dadurch gekennzeichnet, daß die Sternfeder (20) topfförmig ausgebildet ist, wobei die Federzungen (16) von dem Grundkörper (12) weg gerichtet sind.

5. Reibungsdämpfer nach Anspruch 4, dadurch gekennzeichnet, daß die Federzungen (16) mit dem Zentralteil (15) einen 90° übersteigenden Winkel einschließen.

6. Reibungsdämpfer nach Anspruch 5, dadurch gekennzeichnet, daß der Winkel zwischen dem Zentralteil (15) und den Federzungen (16) größer ist als 120°.

7. Reibungsdämpfer nach einem der Ansprüche 1 bis 6, dadurch gekennzeichnet, daß jeweils eine Federzunge (16) an einem Mantelsegment (13) anliegt.

8. Reibungsdämpfer nach einem der Ansprüche 1 bis 6, dadurch gekennzeichnet, daß jeweils mehrere Federzungen (16) an einem Mantelsegment (13) anliegen.

9. Reibungsdämpfer nach einem der Ansprüche 1 bis 8, dadurch gekennzeichnet, daß der Zentralteil (15) der Sternfeder (20) an einem zentralen Vorsprung des Grundkörpers (12) des topfförmigen Reibkolbens (3a) mittelbar oder unmittelbar anliegt.

10. Reibungsdämpfer nach einem der Ansprüche 1 bis 9, dadurch gekennzeichnet, daß die Mantelsegmente (13) mit dem Grundkörper (12) jeweils über eine Verbindungsstelle von verringertem Querschnitt zusammenhängen.

11. Reibungsdämpfer nach einem der Ansprüche 1 bis 10, dadurch gekennzeichnet, daß die Mantelsegmente (13) an den Verbindungsstellen mit dem Grundkörper (12) eine geringere radiale Breite besitzen als an ihren freien Enden.

12. Reibungsdämpfer nach einem der Ansprüche 1 bis 11, dadurch gekennzeichnet, daß der Grundkörper (12) des topfförmigen Reibkolbens (3a) und der Zentralteil (15) der Sternfeder (20) sandwichartig aneinander anliegend gemeinsam auf einem Fortsatz (7) des Kernteils (2) befestigt, insbesondere angenietet sind.

13. Reibungsdämpfer nach einem der Ansprüche 1 bis 12, dadurch gekennzeichnet, daß an mindestens einer axial gerichteten Endfläche des topfförmigen Reibkolbens (3a) eine Schutzscheibe (6) angebracht ist.

14. Reibungsdämpfer nach Anspruch 13, dadurch gekennzeichnet, daß die Schutzscheibe (6) gemeinsam mit dem Reibkolben (3a) und mit der Federung (20) auf einem Fortsatz (7) des Kernteils (2) befestigt ist.

15. Reibungsdämpfer nach einem der Ansprüche 1 bis 14, dadurch gekennzeichnet, daß mehrere Sternfedern (20) stapelartig übereinander angeordnet sind.

16. Reibungsdämpfer nach einem der Ansprüche 4 bis 15, dadurch gekennzeichnet, daß an der Topfbodeninnenseite einer topfförmig ausgebildeten Sternfeder (20) eine Beilagscheibe (17) anliegt.

17. Reibungsdämpfer nach Anspruch 16, dadurch gekennzeichnet, daß die Beilagscheibe (17) mit ihrem radial äußeren Rand auf die Federzungen (16) einwirkt.

18. Reibungsdämpfer nach Anspruch 16 oder 17, dadurch gekennzeichnet, daß die Beilagscheibe (17) gemeinsam mit der Sternfeder (20) und dem Reibkolben (3a) sowie gegebenenfalls gemeinsam auch mit einer Schutzscheibe (6) an einem Fortsatz (7) des Kernteils (2) befestigt ist.

19. Reibungsdämpfer nach einem der Ansprüche 1 bis 18, dadurch gekennzeichnet, daß der Außenteil (1) von dem Zylinder (1) eines Zylinderkolbengeräts gebildet ist und der Kernteil (2) von einer Kolbenstange (2) des Zylinderkolbengeräts gebildet ist, wobei die Kolbenstange (2) dichtend durch mindestens ein Endteil (4, 5) des Zylinders (1) hindurchgeführt ist und der Innenraum (10, 11) des Zylinders (1) mit einem Fluid gefüllt ist.

20. Reibungsdämpfer nach Anspruch 19, dadurch gekennzeichnet, daß die Schlitze (14) Überströmkanäle zwischen zwei Arbeitsräumen (10, 11) bilden, welche innerhalb des Zylinders (1) beidseits der Reibkolbenbaugruppe (3) gebildet sind.

21. Reibungsdämpfer nach einem der Ansprüche 19 und 20, dadurch gekennzeichnet, daß das Fluid wenigstens zum Teil aus unter Druck stehendem Gas gebildet ist.

22. Reibungsdämpfer nach einem der Ansprüche 1 bis 18, dadurch gekennzeichnet, daß der Kernteil von dem Zylinder (141) eines Zylinderkolbengeräts (140) gebildet ist und der Außenteil von einem auf dem Zylinder (141) außenseitig geführten Teleskoprohr (151).

23. Reibungsdämpfer nach Anspruch 22, dadurch gekennzeichnet, daß das Zylinderkolbengerät (140) als eine Druckgasfeder ausgebildet ist.

## Revendications

1. Amortisseur à friction, comprenant une partie extérieure (1) avec une cavité (10, 11) délimitée par une face intérieure cylindrique (8), une partie centrale (2) déplaçable télescopiquement par rapport à la partie extérieure (1) dans le sens de l'axe longitudinal de la face cylindrique (8), et un ensemble de piston à friction (3) fixé sur la partie centrale (2), lequel est en engagement de friction avec la face intérieure (8) de la partie extérieure (1), l'ensemble de piston à friction (3) présentant une multiplicité d'éléments de friction répartis autour de son axe médian, et ces éléments de friction étant pressés par une suspension élastique à action radiale en engagement de friction avec la face intérieure (8) de la partie extérieure (1), les éléments de friction étant formés par des segments d'enveloppe (13) d'un piston à friction (3a) en forme de pot, qui sont séparés les uns des autres par des fentes (14) et qui sont solidaires d'un corps de base (12) du piston à friction en forme de pot (3a) qui leur est commun, caractérisé en ce que la suspension élastique à action radiale est formée par au moins un ressort en étoile (20) avec une partie centrale (15) et une multiplicité de languettes élastiques (16), la partie centrale (15) s'appliquant du côté intérieur dans le sens axial, directement ou indirectement, en sandwich, contre le corps de base (12) du piston à friction en forme de pot (3a), et les languettes élastiques (16) s'appliquant du coté intérieur dans le sens radial contre les segments d'enveloppe (13) du piston à friction en forme de pot (3a), de sorte que la force de friction de l'amortisseur peut être réglée à une valeur définie.

2. Amortisseur à friction selon la revendication 1, caractérisé en ce que le piston à friction (3a) est réalisé en matière plastique, notamment en matière plastique élastomère, ou en caoutchouc.

3. Amortisseur à friction selon la revendication 1 ou 2, caractérisé en ce que le ressort en étoile (20) s'applique contre les segments d'enveloppe (13) à proximité de leurs extrémités éloignées du corps de base (12).

4. Amortisseur à friction selon l'une des revendications 1 à 3, caractérisé en ce que le ressort en étoile (20) est configuré en forme de pot, les languettes élastiques (16) étant dirigées en éloignement du corps de base (12).

5. Amortisseur à friction selon la revendication 4, caractérisé en ce que les languettes élastiques (16) forment avec la partie centrale (15) un angle supérieur à 90°.

6. Amortisseur à friction selon la revendication 5, caractérisé en ce que l'angle entre la partie centrale (15) et les languettes élastiques (16) est supérieur à 120°.

7. Amortisseur à friction selon l'une des revendications 1 à 6, caractérisé en ce qu'une languette élastique (16) s'applique contre chaque segment d'enveloppe (13).

8. Amortisseur à friction selon l'une des revendications 1 à 6, caractérisé en ce que plusieurs languettes élastiques (16) s'appliquent contre chaque segment d'enveloppe (13).

9. Amortisseur à friction selon l'une des revendications 1 à 8, caractérisé en ce que la partie centrale (15) du ressort en étoile (20) s'applique directement ou indirectement contre une saillie centrale du corps de base (12) du piston à friction en forme de pot (3a).

10. Amortisseur à friction selon l'une des revendications 1 à 9, caractérisé en ce que les segments d'enveloppe (13) sont chacun assemblés au corps de base (12) par l'intermédiaire d'un point d'assemblage de section réduite.

11. Amortisseur à friction selon l'une des revendications 1 à 10, caractérisé en ce que les segments d'enveloppe (13) ont une largeur radiale plus petite aux points d'assemblage avec le corps de base (12) qu'à leurs extrémités libres.

12. Amortisseur à friction selon l'une des revendications 1 à 11, caractérisé en ce que le corps de base (12) du piston à friction en forme de pot (3a) et la partie centrale (15) du ressort en étoile (20) sont fixés, notamment rivetés, sur un prolongement (7) de la partie centrale (2) en étant appliqués en sandwich l'un contre l'autre.

13. Amortisseur à friction selon l'une des revendications 1 à 12, caractérisé en ce qu'un disque de protection (6) est disposé sur au moins une face terminale orientée axialement du piston à friction en forme de pot (3a).

14. Amortisseur à friction selon la revendication 13, caractérisé en ce que le disque de protection (6) est fixé conjointement avec le piston à friction (3a) et la suspension élastique (20) sur un prolongement (7) de la partie centrale (2).

15. Amortisseur à friction selon l'une des revendications 1 à 14, caractérisé en ce que plusieurs ressorts en étoile (20) sont disposés en empilage les uns au-dessus des autres.

16. Amortisseur à friction selon l'une des revendications 4 à 15, caractérisé en ce qu'une rondelle de calage (17) s'applique contre le côté intérieur du fond de pot d'un ressort en étoile (20) configuré en forme de pot.

17. Amortisseur à friction selon la revendication 16, caractérisé en ce que la rondelle de calage (17) agit sur les languettes élastiques (16) par son bord radialement extérieur.

18. Amortisseur à friction selon la revendication 16 ou 17, caractérisé en ce que la rondelle de calage (17) est fixée conjointement avec le ressort en étoile (20) et le piston à friction (3a), ainsi éventuellement qu'avec un disque de protection (6), sur un prolongement (7) de la partie centrale (2).

19. Amortisseur à friction selon l'une des revendications 1 à 18, caractérisé en ce que la partie extérieure (1) est formée par le cylindre (1) d'un ensemble cylindre-piston, et la partie centrale (2) est formée par une tige de piston (2) de l'ensemble cylindre-piston, la tige de piston (2) étant guidée de manière étanche à travers au moins une partie terminale (4, 5) du cylindre (1), et l'espace intérieur (10, 11) du cylindre (1) étant rempli d'un fluide.

20. Amortisseur à friction selon la revendication 19, caractérisé en ce que les fentes (14) forment des canaux de trop-plein entre deux chambres de travail (10, 11) qui sont formées à l'intérieur du cylindre (1) de part et d'autre de l'ensemble de piston à friction (3).

21. Amortisseur à friction selon l'une des revendications 19 et 20, caractérisé en ce que le fluide est constitué au moins en partie par du gaz sous pression.

22. Amortisseur à friction selon l'une des revendications 1 à 18, caractérisé en ce que la partie centrale est formée par le cylindre (141) d'un ensemble cylindre-piston (140), et la partie extérieure par un tube télescopique (151) guidé extérieurement sur le cylindre (141).

23. Amortisseur à friction selon la revendication 22, caractérisé en ce que l'ensemble cylindre-piston (140) est réalisé sous la forme d'un ressort à gaz sous pression.

## Claims

1. Friction damper comprising an outer part (1) having a cavity (10, 11) limited by a cylindrical inner surface (8), a core part (2) telescopically movable in relation to the outer part (1) in the direction of the longitudinal axis of the cylinder surface (8) and a friction piston group (3) secured on the core part (2), which group is in frictional engagement with the inner surface (8) of the outer part (1), the friction piston group (3) comprising a plurality of friction elements distributed about its central axis and these friction elements being stressed by a radially acting spring system into frictional engagement with the inner surface (8) of the outer part, the friction elements being formed by skirt segments (13) of a friction piston (3a) of pot form which are separated from one another by slots (14) and cohere integrally with a basic body (12), common to them, of the pot-shaped friction piston (3a), characterised in that the radially acting spring system is formed by at least one star spring (20) with a central part (15) and a plurality of spring tongues (16), where the central part (15) rests in sandwich manner indirectly or directly axially inwardly on the basic body (12) of the pot-shaped friction piston (3a) and the spring tongues (16) rest radially inwardly on the skirt segments (13) of the pot-shaped friction piston (3a), so that the friction force of the damper is adjustable to a defined value.

2. Friction damper according to Claim 1, characterised in that the friction piston (3a) consists of synthetic plastics material, especially elastomer synthetic plastics material, or rubber.

3. Friction damper according to Claim 1 or 2, characterised in that the star spring (20) rests on the skirt segments (13) close to their ends remote from the basic body (12).

4. Friction damper according to one of Claims 1–3, characterised in that the star spring is made in pot form, with the spring tongues (16) directed away from the basic body (12).

5. Friction damper according to Claim 4, characterised in that the spring tongues (16) include with the central part (15) an angle exceeding 90°.

6. Friction damper according to Claim 5, characterised in that the angle between the central part (15) and the spring tongues (16) is greater than 120°.

7. Friction damper according to one of Claims 1 to 6, characterised in that in each case a spring tongue (16) rests on a skirt segment (13).

8. Friction damper according to one of Claims 1 to 6, characterised in that in each case several spring tongues (16) rest on one skirt segment (13).

9. Friction damper according to one of Claims 1 to 8, characterised in that the central part (15) of the star spring (20) rests indirectly or directly on a central projection of the basic body (12) of the pot-shaped friction piston (3a).

10. Friction damper according to one of Claims 1 to 9, characterised in that the skirt segments (13) are in each case in connection with the basic body (12) through a connection of reduced cross-section.

11. Friction damper according to one of Claims 1 to 10, characterised in that the skirt segments (13) possess a smaller radial width at the connection points with the basic body (12) than at their free ends.

12. Friction damper according to one of Claims 1 to 11, characterised in that the basic body (12) of the pot-shaped friction piston (3a) and the central part (15) of the star spring (20) are secured, especially riveted, in common on an extension (7) of the core part (2), lying against one another in sandwich manner.

13. Friction damper according to one of Claims 1 to 12, characterised in that a protective plate (6) is fitted on at least one axially directed end face of the pot-shaped friction piston (3a).

14. Friction damper according to Claim 13, characterised in that the protective plate (6) is secured in common with the friction piston (3a) and with the spring system (20) on an extension (7) of the core part (2).

15. Friction damper according to one of Claims 1 to 14, characterised in that several star springs (20) are arranged one above the other in stack manner.

16. Friction damper according to one of Claims 4 to 15, characterised in that a washer (17) rests on the inside of the pot bottom of a star spring (20) made in pot form.

17. Friction damper according to Claim 16, characterised in that the washer (17) acts with its radially outer edge upon the spring tongues (16).

18. Friction damper according to Claim 16 or 17, characterised in that the washer (17) is secured, in common with the star spring (20) and the friction piston (3a), and possibly also in common with a protective plate (6), on an extension (7) of the core part (2).

19. Friction damper recording to one of Claims 1 to 18, characterised in that the outer part (1) is formed by the cylinder (1) of a cylinder-piston appliance and the core part (2) is formed by a piston rod (2) of the cylinder-piston appliance, the piston rod (2) being conducted in sealing manner through at least one end part (4, 5) of the cylinder (1) and the interior space (10, 11) of the cylinder (1) being filled with a fluid.

20. Friction damper according to Claim 19, characterised in that the slots (14) form transfer passages between two working chambers (10, 11), which are formed within the cylinder (1) on both sides of the friction piston group (3).

21. Friction damper according to one of Claims 19 and 20, characterised in that the fluid is formed at least partially from gas under pressure.

22. Friction damper according to one of Claims 1 to 18, characterised in that the core part is formed by the cylinder (141) of a cylinder-piston appliance (140) and the outer part by a telescopic tube (151) guided externally on the cylinder (141).

23. Friction damper according to Claim 22, characterised in that the cylinder-piston appliance (140) is formed as a compressed-gas spring.

# Fig. 1

# Fig. 2

Fig. 3

EP 0 256 390 B1